# EUROPÄISCHE PATENTSCHRIFT

(11) **EP 3 069 836 B1**
(45) Veröffentlichungstag und Bekanntmachung des Hinweises auf die Patenterteilung: **30.10.2024**
(21) Anmeldenummer: 16159140.9
(22) Anmeldetag: 08.03.2016
(51) Int. Cl.: B26D 7/32, B65G 47/08, B65G 47/68, B65G 57/32

(54) **ÜBERLAPPUNGSVORRICHTUNG**
OVERLAPPING DEVICE
DISPOSITIF DE CHEVAUCHEMENT

(30) Priorität: 18.03.2015 DE 102015104055
(43) Veröffentlichungstag der Anmeldung: 21.09.2016
(60) Teilanmeldung: 20154531.6
(73) Patentinhaber: Textor Maschinenbau GmbH, 87787 Wolfertschwenden (DE)
(72) Erfinder: MAYER, Josef, 87766 Memmingerberg (DE); MAIER, Wilfried, 87463 Dietmannsried (DE); SCHMEISER, Jörg, 87487 Wiggensbach (DE)
(74) Vertreter: Manitz Finsterwald Patent- und Rechtsanwaltspartnerschaft mbB

(56) Entgegenhaltungen:
- EP-A2- 0 274 229
- WO-A1-2004/011209
- DE-A1- 3 642 123
- US-A- 6 152 284

## Beschreibung

Die Erfindung betrifft eine Überlappungseinheit nach dem Oberbegriff des Anspruchs 1 sowie ein Verfahren mit den Merkmalen des Anspruchs 11 zum seitlichen Überlappen von in einer Längsrichtung transportierten Portionen, die jeweils wenigstens eine von einem Lebensmittelprodukt abgetrennte Scheibe umfassen.

Ein seitliches Überlappen von Portionen kann beispielsweise dann erforderlich sein, wenn mehrere nebeneinander liegende Lebensmittelprodukte wie beispielsweise Wurst- oder Käselaibe mittels einer Aufschneidevorrichtung, z.B. mittels eines Hochgeschwindigkeitsslicers, gleichzeitig aufgeschnitten werden und dadurch in jeder Spur eine Einzelportion aus einer oder mehreren Lebensmittelscheiben erzeugt wird. In der Praxis ist es nämlich häufig gewünscht, beispielsweise aus zwei derartigen Einzelportionen Gesamtportionen zu bilden, die jeweils an einer nachgeordneten Verpackungseinrichtung in eine für den Verkauf vorgesehene Verpackung eingelegt und darin in Form von seitlich überlappten Einzelportionen präsentiert werden sollen.

Ein seitliches Überlappen von Portionen erfolgt bislang üblicherweise mittels relativ lang bauenden Fördereinrichtungen, deren Baulänge beispielsweise 3 bis 4 m betragen kann. Bekannte Überlapper umfassen zwei durchgehend getrennt in unterschiedlichen Ebenen übereinander angeordnete Bandförderer, denen eingangsseitig eine sogenannte Wippe zugeordnet ist, mittels welcher ein Teil der einlaufenden Portionen auf die obere Förderebene und ein anderer Teil der einlaufenden Portionen auf die untere Förderebene geleitet wird. Am Ende der oberen Förderebene wird dann eine Portion von der oberen Förderebene auf eine in der unteren Förderebene transportierte Portion abgelegt. Jede der beiden Förderebenen ist mit zumindest einem eigenen Antrieb versehen, damit die Fördergeschwindigkeiten entsprechend eingestellt werden können. Ein weiterer Antrieb ist für die separate, eingangsseitig zugeordnete Wippe erforderlich.

Bekannte Überlapper benötigen daher aufgrund ihrer Länge nicht nur viel Platz, sondern besitzen einen aufwändigen und teuren Aufbau, da mit den beiden Förderebenen und der Wippe wenigstens drei unabhängige Bandförderer vorgesehen und mit voneinander unabhängigen Antrieben ausgestattet werden müssen. Für große Durchsatzmengen ist ein solcher Aufwand angemessen und passend, insbesondere bei dauerhafter Anwendung der Überlappungsfunktion.

Eine Vorrichtung mit den Merkmalen des Oberbegriffs des Anspruchs 1 ist aus EP 0 274 229 A2 bekannt. DE 36 42 123 A1 (die inhaltlich der EP 0 274 229 A2 entspricht) und WO 2004/011209 A1 beschreiben ebenfalls Vorrichtungen zum Überlappen von Portionen, bei denen mehrere einzelne Förderer hintereinander angeordnet sind. Aus US 6,152 284 ist eine Fördereinrichtung mit Riemenförderern bekannt, die nicht zum Überlappen von Portionen ausgebildet ist.

Aufgabe der Erfindung ist es daher, eine Vorrichtung sowie ein Verfahren der eingangs genannten Art zu schaffen, die auf möglichst einfache und kostengünstige Weise ein seitliches Überlappen von Portionen ermöglichen und insbesondere möglichst vielseitig einsetzbar sind.

Die Lösung dieser Aufgabe erfolgt durch die Merkmale des Anspruchs 1 und des Anspruchs 11.

Erfindungsgemäß können zwei nebeneinander liegend einlaufende Portionen ohne Zuhilfenahme weiterer Einrichtungen auf unterschiedliche Höhenniveaus gebracht und anschließend aufeinander gelegt werden. Da die beiden Spuren einlaufseitig um eine gemeinsame Eingangsachse umgelenkt sind, kann die erfindungsgemäße Überlappungseinheit unmittelbar und ohne Zwischenschaltung einer Wippe an einen vorhergehenden Förderer anschließen.

Die beiden Spuren des Bandförderers lassen sich derart führen, dass die unterschiedlichen Höhenniveaus innerhalb einer vergleichsweise kurzen Förderstrecke in Längsrichtung erreicht sind. Die erfindungsgemäße Überlappungseinheit benötigt daher nur eine vergleichsweise kurze Baulänge. Es hat sich gezeigt, dass für eine erfindungsgemäße Überlappungseinheit weniger als die Hälfte der von bekannten Überlappern benötigten Baulänge ausreichend ist.

Erfindungsgemäß umfasst der Bandförderer für jede der beiden Spuren eine Mehrzahl von nebeneinander mit Abstand voneinander verlaufenden Förderriemen. Die Förderriemen sind bevorzugt Rundriemen mit einem kreisförmigen, ovalen oder elliptischen Querschnitt, wobei aber auch andere Querschnittsformen möglich sind und beispielsweise auch sogenannte Trapezriemen oder T-Riemen zum Einsatz kommen können. Derartige Förderriemen und somit die von diesen gebildeten Spuren können einfach und zuverlässig in der jeweils gewünschten Weise geführt und umgelenkt werden, und zwar sowohl steigungsverändernd, d.h. in der Höhe, als auch richtungsverändernd in Querrichtung.

Ein besonderer Vorteil der Erfindung besteht darin, dass für die Realisierung eines bestimmten Überlappungskonzeptes, also für die Erzeugung eines bestimmten Ablagebildes der von den beiden Spuren geförderten Portionen, während des Überlappungsbetriebs keine Komponenten der Überlappungseinheit verstellt zu werden brauchen. Die Art und Weise der Überlappung, d.h. das Ablagebild, braucht nur zu Beginn einmalig durch Einstellen des Verlaufs der beiden Spuren festgelegt zu werden.

Des Weiteren können beide Spuren gemeinsam angetrieben werden. Besonders bevorzugt erfolgt ein gemeinsamer Antrieb über die gemeinsame Eingangsachse. Folglich ist es möglich, die erfindungsgemäße Überlappungseinheit mit nur einem einzigen Antrieb zu betreiben.

Die Erfindung ermöglicht es somit, relativ wenig Platz benötigende, vergleichsweise einfach aufgebaute sowie sehr kostengünstige Überlappungseinheiten bereitzustellen, was wiederum gemäß einer bevorzugten Ausführung der Erfindung die vorteilhafte Möglichkeit schafft, ein Kassetten- oder Modulkonzept zu realisieren, bei dem die Überlappungseinheit als ein als Ganzes handhabbares Modul ausgebildet ist, das beispielsweise als Ganzes einem Unterbau oder Gestell entnehmbar und wieder einsetzbar ist. Für eine solche Überlapper-Kassette kann ein stationärer Unterbau vorgesehen sein, mit dem die Kassette koppelbar ist. Zum einen können hierdurch grundsätzlich beliebig viele unterschiedlich konfigurierte Überlappungseinheiten bereitgestellt werden, die vom Benutzer wahlweise in die jeweilige Anlage eingesetzt werden können, um ein jeweils gewünschtes, anwendungsspezifisches Überlappungskonzept mit einer entsprechend konfigurierten Überlapper-Kassette zu realisieren. Ferner ist es möglich, mehrere jeweils in insbesondere aufeinander abgestimmter Weise konfigurierte Überlappungseinheiten aufeinanderfolgend einzusetzen, um Überlappungskonzepte mit sukzessive zeitlich nacheinander erfolgenden, korrespondierenden Überlappungsvorgängen zu realisieren. Ferner ist es möglich, eine oder mehrere Überlappungseinheiten in eine übergeordnete Funktionseinheit zu integrieren, insbesondere in einen Hochgeschwindigkeitsslicer. So kann z.B. eine Überlappungseinheit in das sogenannte Portioniersystem eines Lebensmittelslicers integriert und dabei insbesondere mit dem Slicer-Gestell gekoppelt werden. Dabei kann die Überlappungseinheit beispielsweise anstelle eines sogenannten Steuerbandes eingesetzt werden, das einem Portionierband des Slicers, auf welchem die Portionen aus den mittels des Schneidmessers des Slicers abgetrennten Scheiben gebildet werden, nachgeordnet ist.

Mit der erfindungsgemäßen Überlappungseinheit ergibt sich somit eine große Variationsmöglichkeit für einen Anlagenbetreiber, so dass auch kleinere Chargen mit unterschiedlichen Ablagebildern verarbeitet werden können.

Des Weiteren ist bevorzugt vorgesehen, dass für zumindest eine der Spuren die einlaufseitige und/oder die auslaufseitige Umlenkposition in Querrichtung veränderbar ist. Auf diese Weise lässt sich z.B. der Spurabstand zwischen der oberen Spur und der unteren Spur einstellen. Des Weiteren können der Spurabstand sowie die Spurpositionen in Querrichtung an einen vorgeordneten Förderer, über den die Portionen einlaufen, angepasst werden. Auslaufseitig kann durch die Veränderbarkeit der Umlenkpositionen der Grad einer seitlichen Überlappung eingestellt werden.

Generell ist es erfindungsgemäß möglich, die Überlappungseinheit derart zu konfigurieren, dass sich auslaufseitig ein Überlappungsgrad von Null ergibt, die beiden Spuren folglich auslaufseitig in Querrichtung nebeneinander liegen. In bestimmten Anwendungen kann eine derart konfigurierte Überlappungseinheit erforderlich sein, um z.B. eine bloße "Durchfahrt" von Portionen ohne seitliche Überlappung zu realisieren. Dabei können Portionen zusammen- oder auseinandergeführt, deren seitlicher Abstand also verkleinert oder vergrößert werden. Eine überlappungsfreie Durchfahrt von Portionen muss also keine Geradeausfahrt parallel zur Längsrichtung sein. Eine überlappungsfreie Fahrt kann beispielsweise innerhalb einer mehrere Module umfassenden Förderstrecke gewünscht sein, mit der sowohl Anwendungen ohne Überlappung als auch Anwendungen mit Überlappung durchführbar sein sollen und die eine Mehrzahl von Aufnahmeplätzen für auswechselbare Fördermodule umfasst. Die erfindungsgemäße Überlappungseinheit kann bei entsprechend gegebener Verstellbarkeit der Spuren folglich bei Bedarf auch als ein reines Fördermodul mit parallel oder mit schräg voneinander weg oder aufeinander zu verlaufenden Spuren ohne Portionsüberlappung eingesetzt werden.

Generell kann die erfindungsgemäße Überlappungseinheit folglich hinsichtlich der Spurführung frei konfigurierbar sein, entweder manuell oder motorisch über eine zugeordnete Steuerung, um auf diese Weise eine große Anwendungsvielfalt zu bieten.

Wie vorstehend bereits erwähnt, kann beiden Spuren der Überlappungseinheit ein gemeinsamer Antrieb zugeordnet sein. Der Antrieb kann über die gemeinsame Eingangsachse erfolgen. So ist es beispielsweise möglich, eine einzige Antriebswelle als gemeinsame Eingangsachse für die beiden Spuren vorzusehen und diese mittels eines einzigen Antriebsmotors in Drehung zu versetzen. Diese Antriebswelle kann mit drehfest koppelbaren Umlenkrollen oder Umlenkhülsen für die Förderelemente der beiden Spuren versehen sein, beispielsweise mit gerillten Hülsen für Förderriemen, wobei die Form der Rillen an den Querschnitt der Riemen angepasst ist.

Alternativ kann der Antrieb der beiden Spuren auch auslaufseitig mittels der beiden Ausgangsachsen erfolgen. Dabei kann jeder Ausgangsachse ein eigener Antrieb zugeordnet sein, so dass die Fördergeschwindigkeiten der beiden Spuren unabhängig voneinander durch entsprechende Ansteuerung der beiden Antriebe eingestellt werden kann.

Eine unabhängige Regelung der Fördergeschwindigkeiten der beiden Spuren kann alternativ auch einlaufseitig an der gemeinsamen Eingangsachse erfolgen, indem beispielsweise ein sogenanntes "Welle in Welle"-Konzept mit zwei konzentrischen, ineinandergesteckten Antriebswellen vorgesehen wird, denen jeweils ein eigener Antrieb zugeordnet ist. Ein solches Konzept kann insbesondere dann von Vorteil sein, wenn die Überlappungseinheit eine Mehrzahl von Spurpaaren mit jeweils einer oberen Spur und einer unteren Spur aufweist, die in Querrichtung alternierend angeordnet sind. Ist lediglich ein einziges Spurpaar mit einer einzigen oberen Spur und einer einzigen unteren Spur vorgesehen, so kann die gemeinsame Eingangsachse geteilt ausgeführt und mit einem linksseitigen Antrieb für die eine Spur und mit einem rechtsseitigen Antrieb für die andere Spur versehen sein.

Die Erfindung ist nicht auf die Erzeugung einer seitlichen Überlappung der Portionen beschränkt. Es ist auch möglich, durch entsprechende Einstellung der Fördergeschwindigkeiten der beiden Spuren einen Längsversatz zwischen den beiden Portionen herzustellen. Eine vergleichsweise einfache, zwei Antriebe erfordernde Möglichkeit zur entsprechenden Regelung der Fördergeschwindigkeiten ergibt sich, wenn jede der beiden Spuren einen eigenen Antrieb aufweist. Ist dagegen ein gemeinsamer Antrieb beispielsweise an der gemeinsamen Eingangsachse vorgesehen, so können die Fördergeschwindigkeiten der beiden Spuren relativ zueinander eingestellt werden, indem für unterschiedliche Förderlängen in den beiden Spuren gesorgt wird. Dies kann beispielsweise dadurch erfolgen, dass sich die beiden Spuren hinsichtlich des Umlenkweges an der Eingangsachse und/oder an den Ausgangsachsen voneinander unterscheiden. Unterschiedlich lange Umlenkwege können beispielsweise durch Umlenkrollen oder Umlenkhülsen mit unterschiedlich großen Durchmessern erreicht werden.

Generell ist folglich gemäß einem bevorzugten Ausführungsbeispiel der Erfindung vorgesehen, dass ein Längsversatz der in den Spuren geförderten Portionen durch Einstellen der Fördergeschwindigkeiten der Spuren relativ zueinander auf ein vorgegebenes Maß einstellbar ist.

Wenn kein Längsversatz zwischen den Portionen gewünscht ist und sich die Förderlängen der beiden Spuren aufgrund der jeweils gewählten Spurführung voneinander unterscheiden, kann dieser Förderlängenunterschied ausgeglichen werden, indem die Fördergeschwindigkeiten der beiden Spuren unterschiedlich eingestellt werden. Ist lediglich ein gemeinsamer Antrieb beispielsweise an der gemeinsamen Eingangsachse vorgesehen, kann ein solcher Ausgleich z.B. durch unterschiedlich lange Umlenkwege beispielsweise an der Eingangsachse oder an den Ausgangachsen erzielt werden.

Die Auswirkungen unterschiedlicher Fördergeschwindigkeiten beim auslaufseitigen Übereinanderlegen der Portionen können vernachlässigt werden.

Wenn die beiden Spuren unterschiedliche Fördergeschwindigkeiten aufweisen, dann kann im Falle eines der Überlappungseinheit unmittelbar vorgeschalteten Förderers vorgesehen sein, dass die Fördergeschwindigkeit dieses Förderers zwischen den Fördergeschwindigkeiten der beiden Spuren liegt.

Die Führung der beiden Spuren bestimmt den Grad der seitlichen Überlappung der mittels der Spuren geförderten Portionen sowie die auslaufseitige Querposition der von den übereinanderliegenden Portionen gebildeten Gesamtportion. Zu dem für eine seitliche Überlappung erforderlichen Querversatz der Portionen relativ zueinander kann entweder nur eine Spur beitragen, wobei es alternativ auch möglich ist, dass beide Spuren einen Beitrag leisten.

Dementsprechend ist gemäß einem bevorzugten Ausführungsbeispiel der Erfindung vorgesehen, dass sowohl die obere Spur als auch die untere Spur schräg zur Längsrichtung verläuft. Beide Spuren laufen hierbei schräg aufeinander zu.

Eine besonders vorteilhafte Führung der beiden Spuren, die insbesondere eine kurze Baulänge ermöglicht und dabei gleichwohl einen ungestörten Portionstransport gewährleistet, kann zwischen der Eingangsachse und den Ausgangsachsen durch eine entsprechend geschickte Umlenkung der Spuren realisiert werden.

Insbesondere ist für die obere Spur zwischen der Eingangsachse und der Ausgangsachse eine Zwischenumlenkung vorgesehen, die vorzugsweise zwei sowohl in Längsrichtung beabstandete als auch auf unterschiedlichen Höhenniveaus liegende Umlenkachsen umfasst.

Durch eine Zwischenumlenkung kann insbesondere dafür gesorgt werden, dass die beiden Spuren auslaufseitig einen ausreichend großen Höhenabstand besitzen, um auf der unteren Spur geförderte Portionen nicht durch das untere bzw. rücklaufende Trum der oberen Spur zu beeinträchtigen.

Dementsprechend kann gemäß einem Ausführungsbeispiel der Erfindung die Zwischenumlenkung steigungsverändernd derart wirksam sein, dass die obere Spur in einem ausgangsseitigen Bereich mit beiden Trumen oberhalb der unteren Spur verläuft.

Des Weiteren kann durch die Zwischenumlenkung erreicht werden, dass die obere Spur und insbesondere deren rücklaufendes unteres Trum schnell an Höhe gewinnt, um in einem eingangsseitigen Bereich eine Beeinträchtigung der Portionen auf der unteren Spur zu vermeiden. Eine Zwischenumlenkung kann insbesondere auch in Querrichtung erfolgen, um eine seitliche Überlappung der beiden Spuren wenigstens so lange zu verhindern bzw. zu reduzieren, d.h. die beiden Spuren seitlich auseinander zu halten, bis zwischen den Spuren eine ausreichend große lichte Höhe für mittels der unteren Spur geförderte Portionen erreicht ist.

Dementsprechend kann die Zwischenumlenkung richtungsverändernd derart wirksam sein, dass das untere Trum der oberen Spur in einem eingangseitigen Bereich einen anderen Winkel mit der Längsrichtung einschließt als das obere Trum der oberen Spur.

Ferner kann die Zwischenumlenkung eine seitliche Überlappung zwischen dem unteren Trum der oberen Spur und dem oberen Trum der unteren Spur vermeiden oder reduzieren, bis eine vorgegebene lichte Höhe zwischen diesen beiden Trumen erreicht ist. Hierdurch wird verhindert, dass sich die beiden Trume berühren und/oder dass eine auf dem oberen Trum der unteren Spur aufliegende Portion in Berührung mit dem unteren Trum der oberen Spur gelangt.

Insbesondere kann vorgesehen sein, dass eine Zwischenumlenkung für das untere Trum der oberen Spur sowohl steigungsverändernd als auch richtungsverändernd wirksam ist, insbesondere also das untere Trum der oberen Spur sowohl nach oben als auch zur Seite gezogen wird.

Die Zwischenumlenkung kann beispielsweise eine oder mehrere parallel zur Eingangsachse und zu den Ausgangsachsen verlaufende Umlenkachsen umfassen, auf denen beispielsweise Umlenkrollen oder Umlenkhülsen frei drehbar angeordnet sind, deren Querpositionen jeweils entsprechend der gewünschten Spurführung eingestellt oder einstellbar sind. Die Lage einer oder jeder Umlenkachse relativ zu der Eingangsachse und/oder zumindest einer der Ausgangsachsen kann verstellbar sein, um die Überlappungseinheit an eine jeweilige Anwendung und insbesondere an die Höhe der jeweils zu fördernden Portionen anpassen zu können.

In einem möglichen Ausführungsbeispiel ist eine Zwischenumlenkung ausschließlich für die obere Spur vorgesehen. Die beiden Trume der unteren Spur können jeweils geradlinig zwischen der Eingangsachse und der Ausgangsachse verlaufen.

Wie vorstehend bereits beschrieben, kann die Überlappungseinheit entweder genau ein Spurpaar oder mehrere in Querrichtung nebeneinander angeordnete Spurpaare jeweils mit einer oberen Spur und einer unteren Spur umfassen. Auf diese Weise kann eine große Vielfalt an Überlappungskonzepten und Ablagebildern für Gesamtportionen realisiert werden. Allen Spurpaaren kann ein gemeinsamer Antrieb z.B. in Form einer die Eingangsachse bildenden, gemeinsamen Antriebswelle zugeordnet sein.

Wie ebenfalls vorstehend bereits erwähnt, kann die Überlappungseinheit als Kassette ausgebildet sein, nämlich als ein im Betrieb mit einem stationären Unterbau gekoppeltes, als Ganzes entnehmbares und wieder einsetzbares Modul, das eine Basis zur Koppelung mit dem Unterbau sowie den von der Basis getragenen Bandförderer umfasst.

Ein Antriebsmotor oder mehrere Antriebsmotoren für die Kassette kann bzw. können in den Unterbau integriert sein und bei abgenommener Kassette am Unterbau verbleiben. Bei einem solchen Konzept ist folglich auf einfache und kostengünstige Weise jeweils nur diejenige Komponente austauschbar, die zur Realisierung bestimmter Anwendungen unterschiedlich zu konfigurieren ist.

Eine erfindungsgemäße Überlappungsvorrichtung umfasst mehrere Überlappungseinheiten, die in Längsrichtung hintereinander geschaltet sind.

Die erfindungsgemäße Überlappungsvorrichtung, die mehrere Überlappungseinheiten der hier offenbarten Art umfasst, kann Bestandteil einer auch als Produktionslinie bezeichneten Anlage sein, die zumindest einer Aufschneidevorrichtung für Lebensmittelprodukte nachgeordnet ist. Es kann sich bei der erfindungsgemäßen Überlappungsvorrichtung auch um eine komplette Produktionslinie einschließlich eines oder mehrerer Hochgeschwindigkeitsslicer und einer nachgeordneten Anlage handeln.

Wenn mehrere Überlappungseinheiten vorgesehen sind, dann können diese unmittelbar aufeinanderfolgend und miteinander korrespondierend, d.h. aufeinander abgestimmt, angeordnet sein, wobei dies aber nicht zwingend ist. Reine Durchfahrstrecken oder Durchfahrmodule ohne Überlappungsfunktionen können zwischen erfindungsgemäßen Überlappungseinheiten vorgesehen sein.

Wie vorstehend bereits erwähnt, kann gemäß einem Ausführungsbeispiel der Erfindung eine Überlappungseinheit derart konfiguriert oder konfigurierbar sein, dass keine Überlappung erfolgt und die beiden Spuren durchgehend nebeneinander verlaufen oder aufeinander zu oder voneinander weg führen, d.h. eine solche erfindungsgemäße Überlappungseinheit kann bei Bedarf auch als ein reines Durchfahrmodul oder als Zusammen- oder Auseinanderführmodul eingesetzt werden.

Mehrere aufeinanderfolgende erfindungsgemäße Überlappungseinheiten können derart unterschiedlich konfiguriert sein, dass in Längsrichtung gesehen die jeweils gewünschte endgültige Gesamtportion sukzessive gebildet wird, und zwar durch zeitlich nacheinander jeweils an einer der Überlappungseinheiten erfolgende Überlappungsvorgänge.

Die Erfindung betrifft auch eine Überlappungseinheit an sich, die keine zusätzlichen vorgeordneten oder nachgeordneten Einrichtungen umfasst.

Die Überlappungseinheit kann als Kassette ausgebildet sein, nämlich als ein im Betrieb mit einem stationären Unterbau gekoppeltes, als Ganzes entnehmbares und wieder einsetzbares Modul, das eine Basis zur Kopplung mit dem Unterbau sowie den von der Basis getragenen Bandförderer umfasst. Bei dem Unterbau kann es sich um ein Slicergestell handeln, so dass eine erfindungsgemäße Überlappungseinheit in einen Slicer integriert sein kann.

Die Erfindung betrifft des Weiteren ein Verfahren zum Bilden von Gesamtportionen mit den Merkmalen des Anspruchs 11.

In einer möglichen Ausführung dieses Verfahrens können die Gesamtportionen jeweils mittels mehrerer in Längsrichtung hintereinander geschalteter Überlappungseinheiten sukzessive durch zeitlich nacheinander jeweils an einer der Überlappungseinheiten erfolgende Überlappungsvorgänge gebildet werden.

Des Weiteren kann bei dem Verfahren vorgesehen sein, dass ein Längsversatz der in den Spuren geförderten Portionen durch Einstellen der Fördergeschwindigkeiten der Spuren relativ zueinander auf ein vorgegebenes Maß eingestellt wird.

Ferner wird gemäß einem Ausführungsbeispiel des Verfahrens ein Förderlängenunterschied zwischen den beiden Spuren ausgeglichen, indem die Fördergeschwindigkeiten der beiden Spuren unterschiedlich eingestellt werden.

Die einzelnen Portionen, die mittels der wenigstens zwei Spuren des Bandförderers der erfindungsgemäßen Überlappungseinheit gefördert werden, können gleich sein, wobei dies aber nicht zwingend ist. Die Portionen können auch aus unterschiedlichen Produktsorten erzeugt worden sein, so dass es sich dann bei den auslaufseitig gebildeten Gesamtportionen jeweils um sogenannte Mischportionen handelt.

Bevorzugt umfassen die Portionen jeweils mehrere in Längsrichtung geschindelt angeordnete Produktscheiben. Dies ist jedoch nicht zwingend. Grundsätzlich können auch gestapelte Portionen seitlich überlappt werden. Wie eingangs bereits erwähnt, können die Portionen auch jeweils nur eine einzige Scheibe umfassen. Eine jeweils mittels der erfindungsgemäßen Überlappungseinheit gebildete Gesamtportion umfasst dann beispielsweise zwei einander seitlich überlappende Einzelscheiben.

Die Erfindung wird im Folgenden beispielhaft unter Bezugnahme auf die Zeichnung beschrieben. Es zeigen:
- Fig. 1: eine perspektivische Ansicht einer als Kassette ausgebildeten Überlappungseinheit gemäß einer Ausführungsform der Erfindung,
- Fig. 2 und 3: jeweils eine Seitenansicht der Überlappungseinheit von Fig. 1,
- Fig. 4: eine Draufsicht auf die Überlappungseinheit von Fig. 1,
- Fig. 5 bis 9: jeweils Teilansichten der Überlappungseinheit von Fig. 1, und
- Fig. 10 bis 13: jeweils eine mögliche erfindungsgemäße Anwendung mit mehreren spezifisch konfigurierten erfindungsgemäßen Überlappungseinheiten.

Die dargestellte erfindungsgemäße Überlappungseinheit 15 ist als eine Kassette ausgebildet, die mit einem nicht dargestellten Unterbau, beispielsweise einem Gestell eines Slicers oder einem einen Bestandteil einer Förderstrecke bildenden Gestell, gekoppelt werden kann. Für diese Koppelung ist die Überlappungseinheit 15 mit einer rahmenartigen Basis 16 versehen. Die dargestellte Überlapper-Kassette 15 ist folglich als Ganzes handhabbar und bildet somit ein als Ganzes aus einem jeweiligen Unterbau bzw. Gestell entnehmbares und wieder einsetzbares Modul.

Der Basisrahmen 16 trägt einen Bandförderer, der in dem dargestellten Ausführungsbeispiel zwei Spurpaare umfasst, die jeweils eine obere Spur 17 und eine untere Spur 19 umfassen, die in Querrichtung alternierend nebeneinander angeordnet sind.

Dieser Bandförderer definiert eine Längsrichtung T zwischen einer einlaufseitigen, als gemeinsame Antriebswelle für alle Spuren 17, 19 ausgebildeten Eingangsachse 21 und zwei passiven stangenförmigen Ausgangsachsen 27, 29.

Jede Spur 17, 19 umfasst mehrere Förderriemen, die einlaufseitig um die gemeinsame Eingangsachse 21 und ausgangsseitig um die auf unterschiedlichen Höhenniveaus und etwa vertikal übereinanderliegenden Ausgangsachsen 27, 29 umgelenkt sind.

Die Führung der oberen Spuren 17 ist zusätzlich durch zwei wiederum passive stangenförmige Umlenkachsen 23, 25 festgelegt, die eine Zwischenumlenkung für die jeweilige obere Spur 17 bilden, auf die nachstehend näher eingegangen wird. Die beiden Umlenkachsen 23, 25 sind an einer gemeinsamen Schwinge 43 angebracht, die um die gemeinsame Eingangsachse 21 verschwenkbar ist. Die Lage der von den beiden Umlenkachsen 23, 25 gebildeten Zwischenumlenkung für die oberen Spuren 17 kann hierdurch relativ zu der Basis 16 und somit relativ zur Eingangsachse 21 und zu den Ausgangsachsen 27, 29, die an der Basis 16 gelagert sind, verändert werden.

Jedes Spurpaar 17, 19 dient dazu, zwei einlaufende Portionen 11, die hier jeweils mehrere in Längsrichtung T geschindelt angeordnete, mittels eines Slicers von einem Lebensmittelprodukt abgetrennte Scheiben 13 umfassen, in Längsrichtung T zu transportieren und mit einem jeweils vorgegebenen Querversatz, also einer jeweils vorgegebenen seitlichen Überlappung, aufeinander zu legen. Dabei wird - in Längsrichtung T gesehen -jeweils eine linke Portion 11 mittels der unteren Spur 17 und eine rechte Portion 11 mittels der oberen Spur 17 gefördert, so dass am auslaufseitigen Ende der Überlappungseinheit 15 beide Portionen 11 auf unterschiedlichen Höhenniveaus liegen. Dabei wird die linke Portion 11 mittels des oberen, hinlaufenden Trums der unteren Spur 19 und die rechte Portion 11 mittels des oberen, hinlaufenden Trums der oberen Spur 17 gefördert.

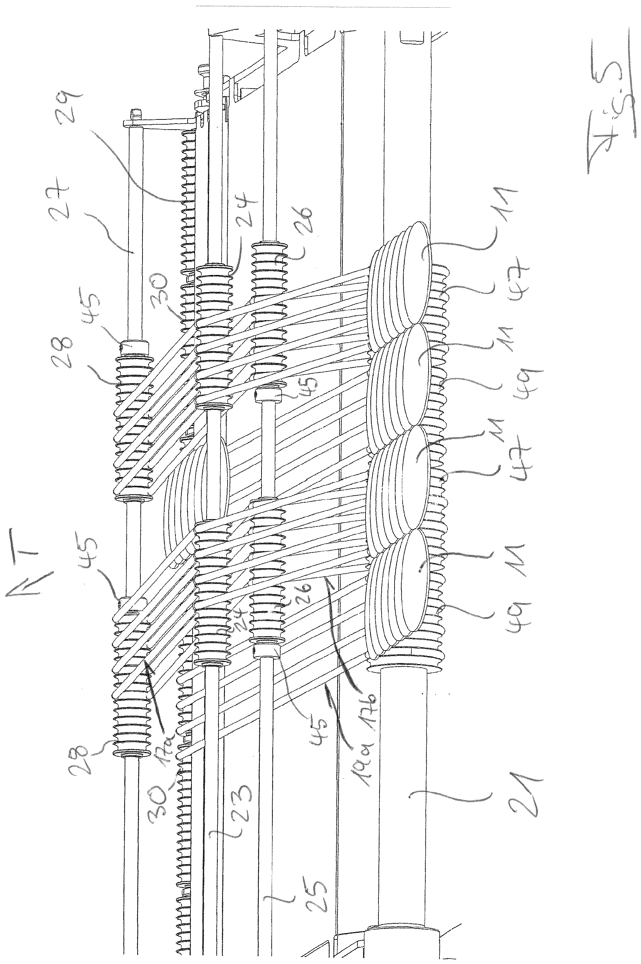

Für die Umlenkung der die Spuren 17, 19 bildenden Förderriemen dienen gerillte Umlenkhülsen, auf die nachstehend in Verbindung mit den Fig. 5 bis 8 näher eingegangen wird und die auf der jeweiligen Achse angeordnet sind. Die Umlenkhülsen auf den beiden Ausgangsachsen 27, 29 und den beiden Zwischenumlenkachsen 23, 25 sind frei drehbar, wohingegen die einlaufseitigen Umlenkhülsen drehfest mit der die Eingangsachse bildenden Antriebswelle 21 gekoppelt sind.

Wenn die dargestellte Überlapper-Kassette 15 mit dem vorstehend erwähnten Unterbau gekoppelt ist, ist die Antriebswelle 21 mit einem nicht dargestellten Antriebsmotor verbunden, beispielsweise über einen Riemen- oder Zahnradantrieb, wodurch die Antriebswelle 21 in Drehung versetzt werden kann, um die Förderriemen der einzelnen Spuren 17, 19 gemeinsam anzutreiben.

Die Querposition der einzelnen Umlenkhülsen ist veränderbar. Die Umlenkhülsen können in einer jeweils eingestellten Querposition fixiert werden. Hierauf wird nachstehend näher eingegangen.

Auf diese Weise kann die erfindungsgemäße Überlappungseinheit 15 zur Anpassung an eine jeweils gewünschte Anwendung schnell und einfach neu konfiguriert werden.

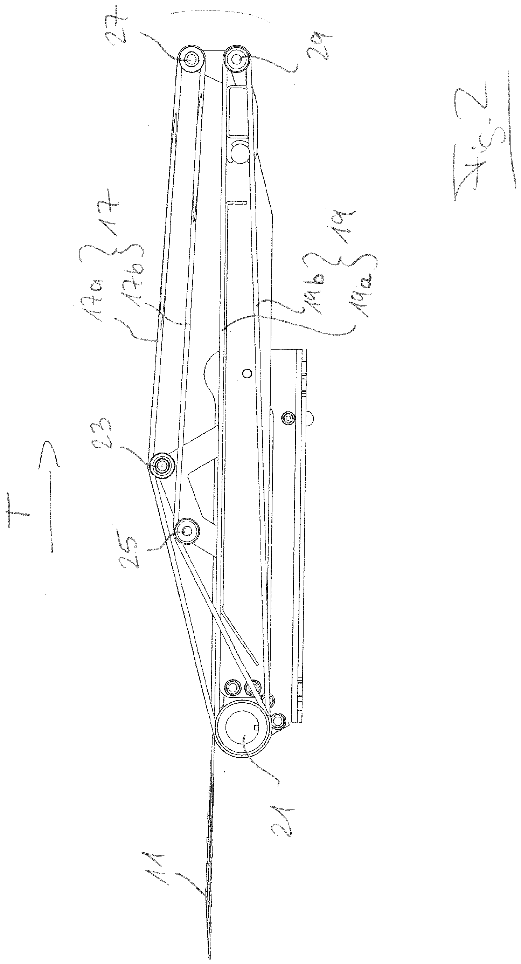

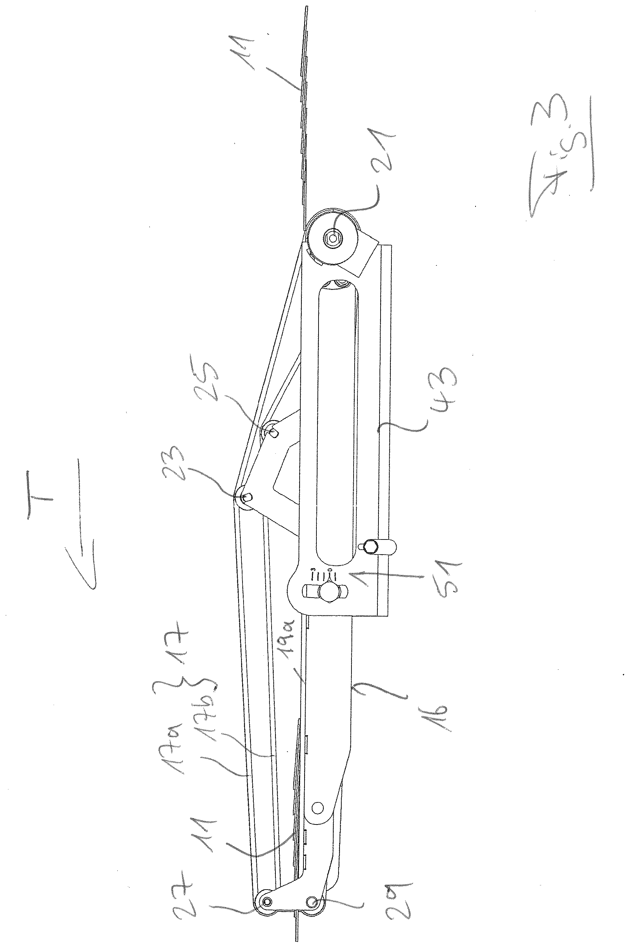

Den Seitenansichten der Fig. 2 und 3 ist insbesondere die Führung der Trume 17a, 17b der oberen Spur 17 sowie der Trume 19a, 19b der unteren Spur 19 zu entnehmen.

Die beiden Trume 19a, 19b der unteren Spur 19 verlaufen jeweils geradlinig zwischen der Eingangsachse 21 und der zugehörigen Ausgangsachse 29, wobei das obere Trum 19a während des Betriebs zumindest im Wesentlichen in einer horizontalen Ebene liegt. Der Durchmesser der Ausgangsachse 29 ist kleiner als der Durchmesser der Eingangsachse 21.

Etwa im Bereich eines Drittels - in Längsrichtung T gesehen - der Längserstreckung der Überlappungseinheit 15 zwischen Eingangsachse 21 und Ausgangsachsen 27, 29 ist die von den Zwischenumlenkachsen 23, 25 gebildete Zwischenumlenkung angeordnet. Die näher an den Ausgangsachsen 27, 29 gelegene obere Umlenkachse 23 liegt oberhalb der Ausgangsachse 27 der oberen Spur 17 sowie oberhalb der näher an der Eingangsachse 21 gelegenen unteren Zwischenumlenkachse 25, die etwa auf dem gleichen Höhenniveau gelegen ist wie die Ausgangsachse 27 der oberen Spur 17.

Hierdurch wird zweierlei erreicht: Zum einen verlaufen beide Trume 17a, 17b der oberen Spur 17 für die verbleibende Förderstrecke bis zur Ausgangsachse 27 ausreichend weit oberhalb des oberen Trums 19a der unteren Spur 19. Zum anderen wird sichergestellt, dass in dem eingangsseitigen Bereich das untere Trum 17b der oberen Spur 17 gewissermaßen "nach oben gezogen" ist und somit früher als ohne diese Zwischenumlenkung auf ein ausreichend weit oberhalb des oberen Trums 19a der unteren Spur 19 liegendes Höhenniveau gelangt, wobei das "Hochziehen" des oberen Trums 17a der oberen Spur 17 mittels der anderen Zwischenumlenkachse 23 sicherstellt, dass im eingangsseitigen Bereich das obere Trum 17a oberhalb des unteren Trums 17b der oberen Spur 17 verbleibt.

Die eingangsseitige, untere Zwischenumlenkachse 25 bewirkt außerdem einen Versatz des unteren Trums 17b der oberen Spur 17 in Querrichtung, worauf nachstehend näher eingegangen wird.

Die Durchmesser der beiden Ausgangsachsen 27, 28 und deren vertikaler Abstand sind derart gewählt, dass eine auf dem oberen Trum 19a der unteren Spur 19 geförderte Portion 11 nicht behindert wird, gleichzeitig aber ein sauberes Ablegen einer mittels des oberen Trums 17a der oberen Spur 17 geförderten Portion 11 auf eine mittels der unteren Spur 19 geförderte Portion gewährleistet ist.

Fig. 3 ist insbesondere die die Zwischenumlenkachsen 23, 25 tragende Schwinge 43 zu entnehmen, die mit einer Skala 51 versehen ist, an welcher die Lage der Zwischenumlenkachsen 23, 25 relativ zur Basis 16 abgelesen werden kann. In Fig. 3 ist außerdem auslaufseitig eine auf dem oberen Trum 19a der unteren Spur liegende Portion 11 dargestellt, deren Höhe kleiner ist als der vertikale Abstand zwischen unterem Trum 17b der oberen Spur 17 und oberem Trum 19a der unteren Spur am auslaufseitigen Ende der Überlappungseinheit 15.

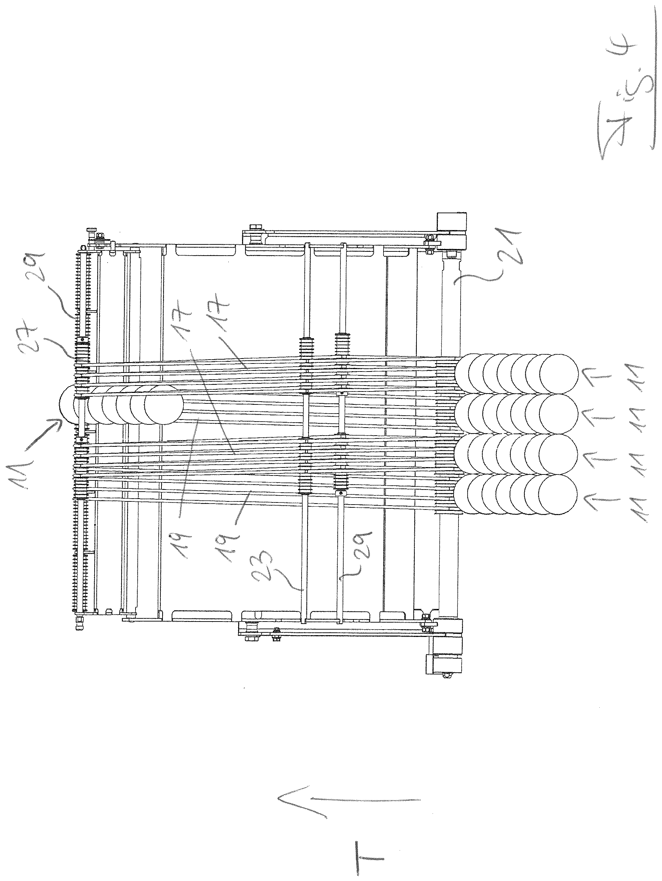

Fig. 4 ist insbesondere zu entnehmen, dass in Längsrichtung T gesehen für jedes Spurpaar jeweils die untere Spur 19 und die obere Spur 17 schräg zur Längsrichtung T und somit in Längsrichtung T aus einer einlaufseitigen Nebeneinanderanordnung in eine auslaufseitige, seitlich überlappende Übereinanderanordnung aufeinander zu verlaufen.

Fig. 5, die eine perspektivische Teilansicht etwa in Längsrichtung T zeigt, ist insbesondere der Unterschied im Verlauf des oberen Trums 17a zum unteren Trum 17b der oberen Spur 17 und dies im Verhältnis zum Verlauf des oberen Trums 19a der unteren Spur 19 zu entnehmen. Mittels der gerillten Umlenkhülse 26 der unteren Zwischenumlenkachse 25 wird nämlich ein eingangsseitiger Querversatz des unteren Trums 17b relativ zum oberen Trum 17a in Fig. 5 nach rechts bewirkt. Hierdurch ist sichergestellt, dass das untere Trum 17b der oberen Spur erst dann in seitliche Überlappung mit dem oberen Trum 19a der unteren Spur gelangt, wenn die durch die untere Zwischenumlenkung 25 vorgegebene Höhe oberhalb des oberen Trums 19a der unteren Spur erreicht ist. Mit anderen Worten wird eingangsseitig das untere Trum 17b seitlich vom oberen Trum 19a der unteren Spur "weggehalten", um eine ausreichende lichte Höhe oder Durchfahrhöhe für eine auf dem oberen Trum 19a der unteren Spur aufliegende Portion 11 sicherzustellen.

Dieses seitliche Weghalten des unteren Trums 17b der oberen Spur hat außerdem den Vorteil, dass die Rückstellkraft der durch das Weghalten ausgelenkten Förderriemen die gerillte Umlenkhülse 26 in die entgegengesetzte Richtung, in Fig. 5 also nach links, drängt. Zur Fixierung der Querposition der Umlenkhülse 26 ist folglich nur auf einer Seite, hier also der linken Seite, eine Fixierung erforderlich, die in dem dargestellten Ausführungsbeispiel in Form eines Klemmrings 45 vorgesehen ist, der z.B. mittels einer Schraube an der die Umlenkachse 25 bildenden Stange in der jeweils gewünschten Querposition fixiert werden kann.

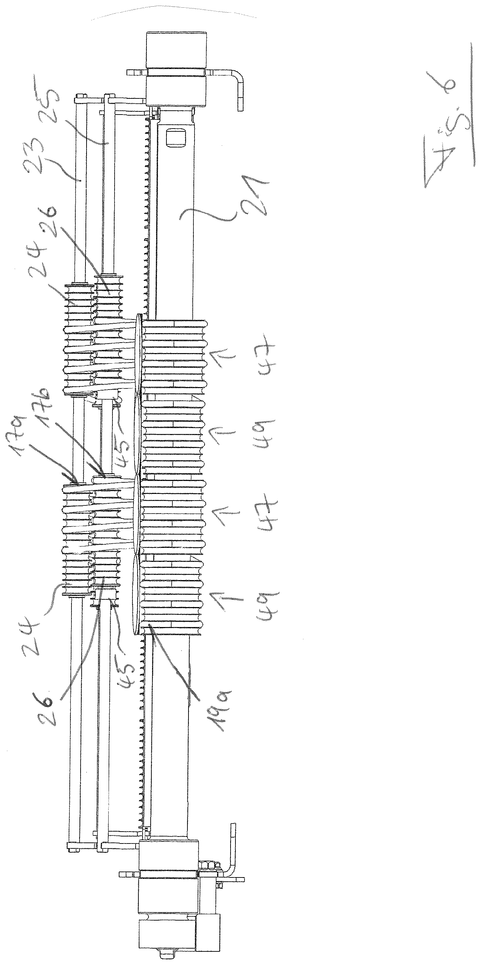

Auch Fig. 6 ist zu entnehmen, dass eingangsseitig bis zur in Längsrichtung T gesehen ersten, unteren Zwischenumlenkachse 25 das untere Trum 17b der oberen Spur 17 nicht parallel zum oberen Trum 17a, sondern geringfügig im zum oberen Trum 17a entgegengesetzten Sinn schräg zur Längsrichtung T verläuft, so dass das untere Trum 17b eingangsseitig außerhalb des Bereiches oberhalb des oberen Trums 19a der unteren Spur 19 bleibt.

Des Weiteren ist Fig. 6 zu entnehmen, dass die auf der gemeinsamen Antriebswelle 21 drehfest angeordneten Umlenkhülsen 47, 49 für die beiden Spuren 17, 19 jedes Spurpaares einen unterschiedlichen Durchmesser besitzen, der jeweils für die obere Spur 19 kleiner ist als derjenige für die untere Spur 17. Aufgrund dieses jeweils für die obere Spur 17 größeren Umlenkweges an der Antriebswelle 21 laufen die Förderriemen der oberen Spur 17 mit einer größeren Fördergeschwindigkeit als jene der unteren Spur 19. Der Durchmesserunterschied ist derart bemessen, dass der daraus resultierende Unterschied in den Fördergeschwindigkeiten der beiden Spuren 17, 19 gerade den Förderlängenunterschied zwischen den beiden Spuren 17, 19 ausgleicht, der durch den anderen Verlauf der oberen Spur 17 relativ zu unteren Spur 19 bedingt ist. Hierdurch wird erreicht, dass jeweils in den gebildeten Gesamtportionen die Portion 11 von der unteren Spur 19 einerseits und die Portion 11 von der oberen Spur 17 andererseits keinen Versatz in Längsrichtung T aufweisen.

Wie im Einleitungsteil erläutert, kann alternativ ein jeweils gewünschter, von Null verschiedener Längsversatz zwischen den Portionen 11 gezielt vorgegeben werden, indem der Durchmesserunterschied an der gemeinsamen Antriebswelle 21 oder an anderer Stelle entsprechend gewählt, allgemein also ein dem jeweils gewünschten Längsversatz entsprechender Förderlängenunterschied zwischen den beiden Spuren 17, 19 bewirkt wird.

Für derartige Einstellungen können auch andere und/oder zusätzliche Umlenkungen für zumindest eine der beiden Spuren 17, 19 und/oder zusätzliche Verstellmöglichkeiten für die im dargestellten Ausführungsbeispiel vorgesehenen Umlenkungen vorgesehen werden.

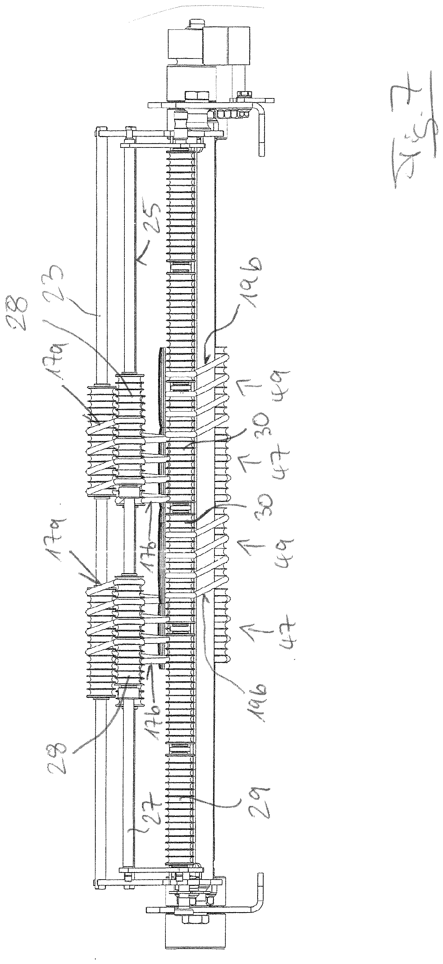

Auch Fig. 7, die eine Vorderansicht der erfindungsgemäßen Überlappungseinheit 15 in einer Richtung entgegengesetzt zur Längsrichtung T zeigt, ist unter anderem der Querversatz des unteren Trums 17b der oberen Spur - hier in Fig. 7 nach links - gegenüber dem oberen Trum 17a im einlaufseitigen Bereich zu entnehmen.

Ferner ist in Fig. 7 durch einen Vergleich der Querpositionen der Umlenkhülsen 30 der unteren Ausgangsachse 29 und der Umlenkhülsen 28 der oberen Ausgangsachse 27 zu erkennen, dass bei der hier gewählten Querpositionierung dieser Umlenkhülsen 28, 30 eine seitliche Überlappung eingestellt ist, die etwa dem Querabstand zweier unmittelbar benachbart verlaufender Förderriemen entspricht.

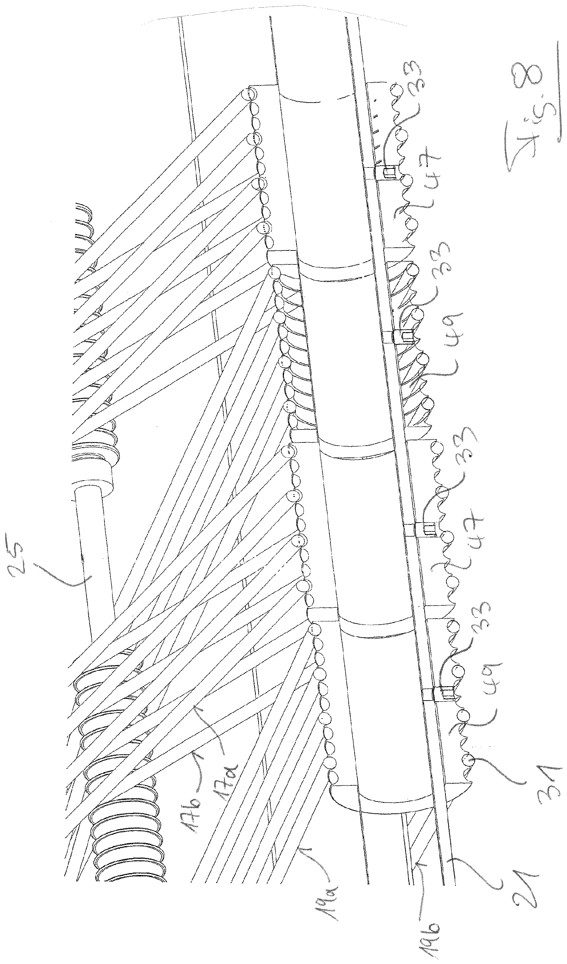

Fig. 8 zeigt insbesondere einen Querschnitt durch die gemeinsame Antriebswelle 21 am eingangsseitigen Ende der Überlappungseinheit 15. Wie an anderer Stelle bereits erwähnt, ist die Querschnittsform der Rillen der Umlenkhülsen 47, 49 an den Querschnitt der Förderriemen 31 angepasst. Dieser Querschnitt ist im hier dargestellten Ausführungsbeispiel kreisförmig, wobei aber auch andere Querschnittsformen möglich sind.

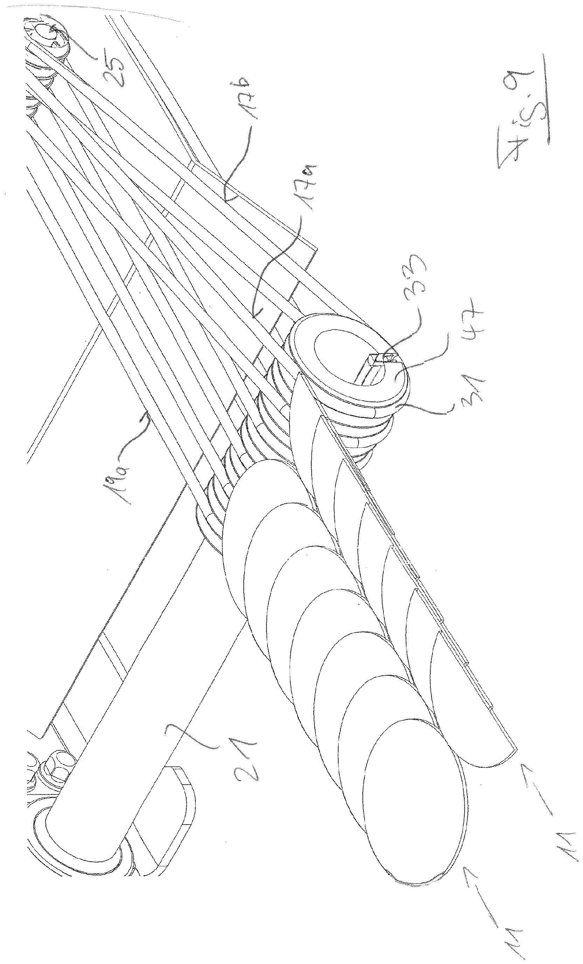

Die Fixierung in Querrichtung sowie die drehfeste Koppelung der Umlenkhülsen 47, 49 auf der Antriebswelle 21 erfolgen für jede Umlenkhülse 47, 49 durch eine Klemmschraube 33, die jeweils durch eine Öffnung im Mantel der Umlenkhülse 47, 49 hindurch in eine Quernut der Antriebswelle 21 eingreift. Diese Art und Weise der lösbaren Fixierung und somit Verstellbarkeit der Umlenkhülsen 47, 49 in Querrichtung auf der Antriebswelle 21 ist auch der geschnittenen Teilansicht der Fig. 9 zu entnehmen.

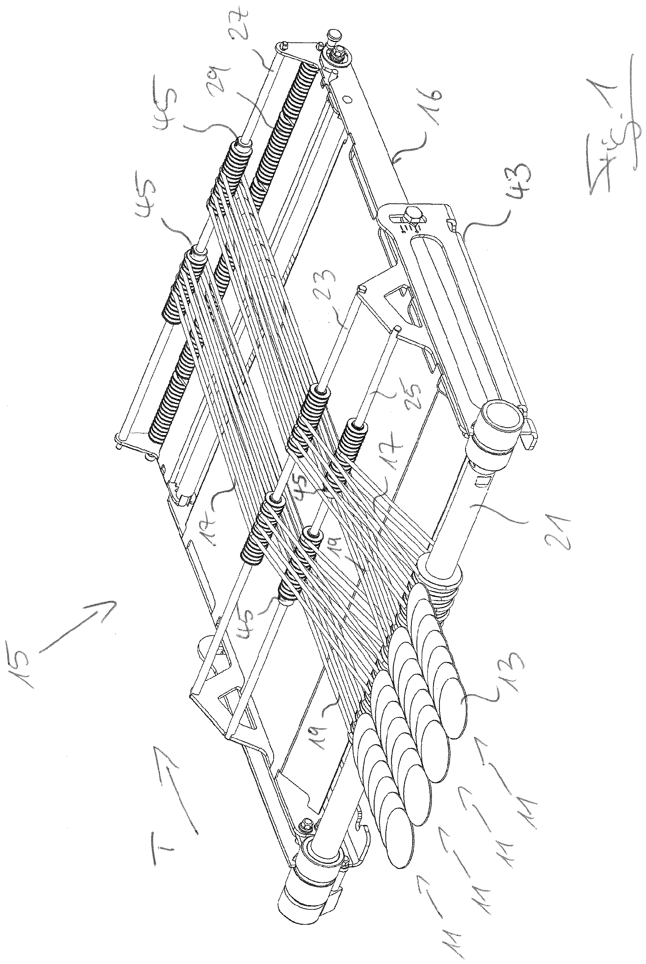

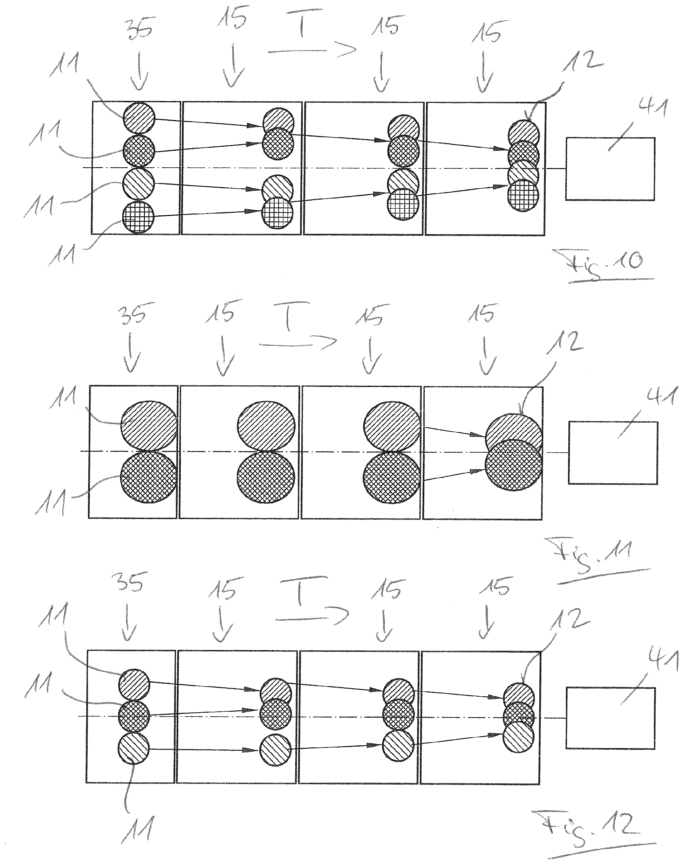

Anhand der Fig. 10 bis 13 sollen im Folgenden rein beispielhaft einige erfindungsgemäß mögliche Anwendungen erläutert werden, bei denen mehrere erfindungsgemäße Überlappungseinheiten 15, wie sie beispielsweise vorstehend in Verbindung mit den Fig. 1 bis 9 beschrieben worden sind, eingesetzt werden können, wobei die Überlappungseinheiten 15 einem Förderer 35 unmittelbar nachgeordnet sind, bei dem es sich insbesondere um das sogenannte erste Steuerband eines Hochgeschwindigkeitsslicers zum gleichzeitigen Aufschneiden von mehreren nebeneinander liegend angeordneten stangen- oder laibförmigen Lebensmittelprodukten handeln kann. Die Überlappungseinheiten 15 können dabei einen Bestandteil des sogenannten Portioniersystems des Slicers bilden, das unter anderem den dargestellten Förderer 35 umfasst. Dabei können die Überlappungseinheiten 15 jeweils in Form einer Kassette ausgebildet und in ein zum Slicer gehörendes Gestell integriert sein. Vorzugsweise erfolgt der Einbau an der Position eines Steuerbandes.

In jeder der dargestellten Anwendungen liegt am auslaufseitigen Ende der in Längsrichtung T gesehen letzten Überlappungseinheit 15 eine Gesamtportion 12 vor, die aus zwei oder mehr Einzelportionen 11 gebildet worden ist, die mittels des nicht dargestellten Slicers erzeugt worden sind.

An diese "Kaskade" von in Längsrichtung T hintereinander angeordneten Überlappungseinheiten 15 schließt sich eine grundsätzlich beliebig ausgestaltete weitere Einrichtung 41 an, mittels welcher die durch die Überlappungseinheit 15 gebildeten Gesamtportionen 12 weitertransportiert bzw. weiterverarbeitet werden können. Beispielsweise können auf der Einrichtung 41 Formate aus einer oder mehreren Gesamtportionen 12 gebildet werden. Der Weitertransport der Gesamtportionen 12 bzw. der aus diesen gebildeten Formate kann beispielsweise senkrecht zur Längsrichtung T oder weiter in Längsrichtung T erfolgen.

In der Anwendung gemäß Fig. 10 laufen über den Förderer 35 Portionen 11 in vier seitlich nebeneinander liegenden Spuren ein. Der Einfachheit halber ist hier jede Portion 11 in Form einer kreisförmigen Scheibe dargestellt. Jede Portion 11 kann z.B. entsprechend der Darstellung in Fig. 1 eine Mehrzahl von in Längsrichtung T geschindelt angeordneten Scheiben umfassen.

Mittels einer ersten Überlappungseinheit 15 werden zunächst jeweils die beiden äußeren Portionen seitlich überlappt, woraufhin mittels einer zweiten Überlappungseinheit 15 ein Zusammenführen dieser beiden Überlappungsportionen erfolgt, woraufhin schließlich mittels einer dritten Überlappungseinheit 15 eine Überlappung der beiden inneren Einzelportionen erfolgt, womit die gewünschte Gesamtportion 12 fertiggestellt ist. Es können beispielsweise Portionen aus Scheiben mit einem Durchmesser (Kaliber) von etwa 60 mm zu einer Gesamtportion 12 mit einer Portionsbreite von insgesamt etwa 160 mm seitlich überlappt werden.

In der Anwendung gemäß Fig. 11 laufen die Portionen 11 lediglich in zwei Spuren ein, wobei die beiden ersten Überlappungseinheiten 15 lediglich auf "Durchfahrt" konfiguriert sind und somit die Querpositionen der Portionen 11 durch diese beiden ersten Überlappungseinheiten 15 nicht verändert werden. Erst mittels der dritten und letzten Überlappungseinheit 15 wird die gewünschte Gesamtportion 12 durch seitliche Überlappung gebildet. In der Anwendung gemäß Fig. 11 genügt es folglich, wenn die Überlappungseinheiten 15 jeweils nur ein Spurpaar mit einer unteren Spur und einer oberen Spur aufweisen, wohingegen bei der Anwendung gemäß Fig. 10 die Überlappungseinheiten 15 jeweils zwei derartige Spurpaare aufweisen.

Mit der Anwendung gemäß Fig. 11 können beispielsweise Portionen mit einem Durchmesser (Kaliber) von 100 mm oder 90 mm zu einer Gesamtportion 12 mit einer Portionsbreite von insgesamt jeweils 160 mm seitlich überlappt werden.

Die Anwendung gemäß Fig. 12 zeigt, dass auch in einer ungeraden Anzahl von Spuren einlaufende Portionen 11 in erfindungsgemäßer Weise gehandhabt werden können. Die in dieser Anwendung nebeneinander liegend einlaufenden drei Portionen 11 werden hier derart geführt, dass zunächst mittels der ersten Überlappungseinheit 15 die beiden linken Portionen 11 seitlich überlappt werden, wohingegen die rechte Portion 11 lediglich in Längsrichtung T durchfährt. Anschließend werden die Überlappungsportion und die rechte Portion mittels der zweiten Überlappungseinheit 15 zusammengeführt, woraufhin dann mittels der dritten und letzten Überlappungseinheit 15 die jeweilige Gesamtportion 12 gebildet wird, in welcher die ursprünglich ganz rechts einlaufende Portion 11 mit seitlicher Überlappung auf der mittleren Einzelportion liegt.

Mit der Anwendung gemäß Fig. 12 können beispielsweise Portionen 11 mit einem Durchmesser (Kaliber) von 55 mm zu einer Gesamtportion 12 mit einer Portionsbreite von insgesamt etwa 110 mm seitlich überlappt werden.

Generell können also erfindungsgemäß die Gesamtportionen 12 mittels mehrerer in Längsrichtung T hintereinander geschalteter, korrespondierender Überlappungseinheiten 15 sukzessive durch zeitlich nacheinander jeweils an einer der Überlappungseinheiten 15 erfolgende Überlappungsvorgänge gebildet werden, wobei bei Bedarf eine oder mehrere der Überlappungseinheiten 15 entweder nur eine seitliche Zusammenführung ohne Überlappungswirkung oder eine bloße Durchfahrt ohne Änderung der relativen Querposition bewirken können.

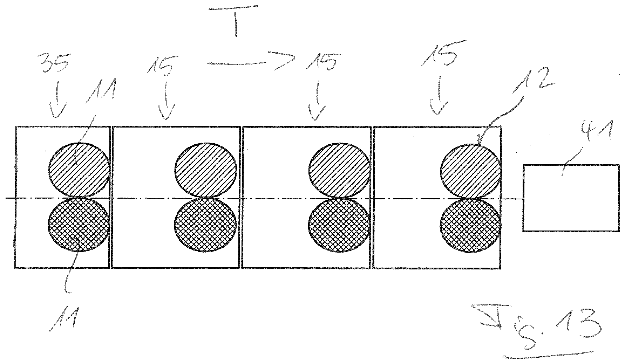

Fig. 13 schließlich zeigt, dass mehrere hintereinander angeordnete Überlappungseinheiten 15 jeweils weder für ein seitliches Überlappen noch für ein seitliches Zusammenführen eingesetzt zu werden brauchen, sondern jeweils "auf Durchfahrt" konfiguriert sein können. Die Gesamtportion 12 entspricht dann der einlaufseitigen Anordnung der beiden Einzelportionen 11.

Des Weiteren veranschaulicht Fig. 13 eine Option, wonach anstelle der erfindungsgemäßen Überlapper-Kassetten herkömmliche Bandkassetten für einen einfachen Geradeaus-Transport eingesetzt werden können.

### Bezugszeichenliste

- 11: Portion
- 12: Gesamtportion
- 13: Scheibe
- 15: Überlappungseinheit
- 16: Basis der Überlappungseinheit
- 17: obere Spur
- 19: untere Spur
- 21: gemeinsame Eingangsachse, Antriebswelle
- 23: Zwischenumlenkung
- 24: Umlenkhülse
- 25: Zwischenumlenkung
- 26: Umlenkhülse
- 27: obere Ausgangsachse
- 28: Umlenkhülse
- 29: untere Ausgangsachse
- 30: Umlenkhülse
- 31: Förderriemen
- 33: Klemmschraube
- 35: Förderer
- 41: Einrichtung
- 43: Schwinge
- 45: Klemmring
- 47: Umlenkhülse für obere Spur
- 49: Umlenkhülse für untere Spur
- 51: Skala

- T: Längsrichtung, Transportrichtung

## Patentansprüche

1. Überlappungseinheit zum seitlichen Überlappen von in einer Längsrichtung (T) transportierten Portionen (11), die jeweils wenigstens eine von einem Lebensmittelprodukt abgetrennte Scheibe (13) umfassen,
die einen Bandförderer mit wenigstens zwei Spuren (17, 19) umfasst,
wobei eine obere Spur (17) und eine untere Spur (19) einlaufseitig um eine gemeinsame Eingangsachse (21) und auslaufseitig um zwei auf unterschiedlichen Höhenniveaus liegende Ausgangsachsen (27, 29) umgelenkt sind,
**dadurch gekennzeichnet,**
- **dass** beiden Spuren (17, 19) ein gemeinsamer Antrieb zugeordnet ist, durch den die gemeinsame Eingangsachse (21) der beiden Spuren (17, 19) antreibbar ist, wobei sich die beiden Spuren (17, 19) hinsichtlich ihres Umlenkweges an der Eingangsachse (21) und/oder an den Ausgangsachsen (27, 29) voneinander unterscheiden,
wobei die Umlenkwege an der Eingangsachse (21) und/oder an den Ausgangsachsen (27, 29) der beiden Spuren unterschiedlich lang sind und durch Umlenkrollen oder Umlenkhülsen (47, 49) mit unterschiedlich großem Durchmesser erreicht sind,
- oder dass als Ausgleich für einen Förderlängenunterschied zwischen den beiden Spuren (17, 19) deren Fördergeschwindigkeiten unterschiedlich eingestellt oder einstellbar sind,
- indem jeder Ausgangsachse (27, 29) ein eigener Antrieb zugeordnet ist,
- oder indem an der gemeinsamen Eingangsachse (21) zwei konzentrische, ineinandergesteckte Antriebswellen vorgesehen sind, denen jeweils ein eigener Antrieb zugeordnet ist,
- oder indem die gemeinsame Eingangsachse (21) einer einzigen oberen Spur (17) und einer einzigen unteren Spur (18) geteilt ausgeführt und mit einem linksseitigen Antrieb für die eine Spur und mit einem rechtsseitigen Antrieb für die andere Spur versehen ist.

2. Überlappungseinheit nach Anspruch 1,
**dadurch gekennzeichnet, dass**
die Ausgangsachsen (27, 29) zumindest im Wesentlichen vertikal übereinander angeordnet sind, und/oder dass für zumindest eine der Spuren (17, 19) die einlaufseitige und/oder die auslaufseitige Umlenkposition in Querrichtung veränderbar ist.

3. Überlappungseinheit nach einem der vorhergehenden Ansprüche,
**dadurch gekennzeichnet, dass**
ein Längsversatz der in den Spuren (17, 19) geförderten Portionen (11) durch Einstellen der Fördergeschwindigkeiten der Spuren (17, 19) relativ zueinander auf ein vorgegebenes Maß einstellbar ist, und/oder dass der Überlappungseinheit (15) ein Förderer (35) unmittelbar vorgeschaltet ist, dessen Fördergeschwindigkeit zwischen den Fördergeschwindigkeiten der beiden Spuren (17, 19) liegt.

4. Überlappungseinheit nach einem der vorhergehenden Ansprüche,
**dadurch gekennzeichnet, dass**
sowohl die obere Spur (17) als auch die untere Spur (19) schräg zur Längsrichtung (T) verläuft.

5. Überlappungseinheit nach einem der vorhergehenden Ansprüche,
**dadurch gekennzeichnet, dass**
für die obere Spur (17) zwischen der Eingangsachse (21) und der Ausgangsachse (27) eine Zwischenumlenkung (23, 25) vorgesehen ist, wobei insbesondere die Zwischenumlenkung (23, 25) steigungsverändernd derart wirksam ist, dass die obere Spur (17) in einem ausgangsseitigen Bereich mit beiden Trumen (17a, 17b) oberhalb der unteren Spur (19) verläuft,
und/oder dass die Zwischenumlenkung (25) richtungsverändernd derart wirksam ist, dass das untere Trum (17b) der oberen Spur (17) in einem eingangsseitigen Bereich einen anderen Winkel mit der Längsrichtung (T) einschließt als das obere Trum (17a) der oberen Spur (17), und/oder dass die Zwischenumlenkung (25) eine seitliche Überlappung zwischen dem unteren Trum (17b) der oberen Spur (17) und dem oberen Trum (19a) der unteren Spur (19) vermeidet oder reduziert, bis eine vorgegebene lichte Höhe zwischen diesen beiden Trumen (17b, 19a) erreicht ist.

6. Überlappungseinheit nach einem der vorhergehenden Ansprüche,
**dadurch gekennzeichnet, dass**
eine Zwischenumlenkung (25) für das untere Trum (17b) der oberen Spur (17) sowohl steigungsverändernd als auch richtungsverändernd wirksam ist, und/oder dass beide Trume (19a, 19b) der unteren Spur (19) jeweils geradlinig zwischen der Eingangsachse (21) und der Ausgangsachse (29) verlaufen.

7. Überlappungseinheit nach einem der vorhergehenden Ansprüche,
**dadurch gekennzeichnet, dass**
die Überlappungseinheit (15) mehrere in Querrichtung nebeneinander angeordnete Spurpaare jeweils mit einer oberen Spur (17) und einer unteren Spur (19) umfasst.

8. Überlappungseinheit nach einem der vorhergehenden Ansprüche,
**dadurch gekennzeichnet, dass**
die Überlappungseinheit (15) als Kassette ausgebildet ist, nämlich als ein im Betrieb mit einem stationären Unterbau gekoppeltes, als Ganzes entnehmbares und wieder einsetzbares Modul, das eine Basis (16) zur Koppelung mit dem Unterbau sowie den von der Basis (16) getragenen Bandförderer umfasst, wobei insbesondere ein Antriebsmotor für die Kassette in den Unterbau integriert ist und bei abgenommener Kassette am Unterbau verbleibt.

9. Vorrichtung zum seitlichen Überlappen von in einer Längsrichtung (T) transportierten Portionen (11), die jeweils wenigstens eine von einem Lebensmittelprodukt abgetrennte Scheibe (13) umfassen,
mit mehreren Überlappungseinheiten (15) jeweils nach einem der vorhergehenden Ansprüche, die in Längsrichtung (T) hintereinander geschaltet sind.

10. Vorrichtung zum Aufschneiden von Lebensmittelprodukten, insbesondere Hochgeschwindigkeitsslicer, mit einer Überlappungseinheit nach einem der Ansprüche 1 bis 8, wobei die Überlappungseinheit (15) in ein Gestell der Aufschneidevorrichtung integriert ist.

11. Verfahren zum Bilden von Gesamtportionen (12), die jeweils wenigstens zwei seitlich überlappende Portionen (11) umfassen, die jeweils wenigstens eine von einem Lebensmittelprodukt abgetrennte Scheibe umfassen,
bei dem die beiden Portionen (11) in nebeneinander liegenden Spuren einer Überlappungseinheit (15) mit den Merkmalen eines der Ansprüche 1 bis 8 zugeführt werden, die einen den beiden Spuren zugeordneten Bandförderer mit einer auf ein oberes Höhenniveau führenden oberen Spur (17) und einer auf ein unteres Höhenniveau führenden unteren Spur (19) umfasst, und
bei dem eine obere Portion (11) mittels der oberen Spur (17) über eine mittels der unteren Spur (19) geförderte untere Portion (11) gefördert und anschließend auf die untere Portion (11) gelegt wird, wobei
die obere Spur (17) und die untere Spur (19) einlaufseitig nebeneinander und auslaufseitig einander seitlich überlappend auf unterschiedlichen Höhenniveaus liegen.

12. Verfahren nach Anspruch 11,
**dadurch gekennzeichnet, dass**
die Gesamtportionen (12) jeweils mittels mehrerer in Längsrichtung (T) hintereinander geschalteter Überlappungseinheiten (15) sukzessive durch zeitlich nacheinander jeweils an einer der Überlappungseinheiten (15) erfolgende Überlappungsvorgänge gebildet werden, und/oder dass ein Längsversatz der in den Spuren (17, 19) geförderten Portionen (11) durch Einstellen der Fördergeschwindigkeiten der Spuren (17, 19) relativ zueinander auf ein vorgegebenes Maß eingestellt wird, und/oder dass ein Förderlängenunterschied zwischen den beiden Spuren (17, 19) ausgeglichen wird, indem die Fördergeschwindigkeiten der beiden Spuren (17, 19) unterschiedlich eingestellt werden.

## Claims

1. An overlapping unit for the lateral overlapping of portions (11) which are transported in a longitudinal direction (T) and which each comprise at least one slice (13) cut off from a food product,
comprising a belt conveyor having at least two tracks (17, 19),
wherein an upper track (17) and a lower track (19) are deflected at the incoming side about a common input axle (21) and at the outgoing side about two output axles (27, 29) disposed at different height levels,
**characterized in that**
- a common drive, by which the common input axle (21) of the two tracks (17, 19) can be driven, is associated with both tracks (17, 19), with the two tracks (17, 19) differing from one another with respect to their deflection path at the input axle (21) and/or at the output axles (27, 29),
wherein the deflection paths at the input axle (21) and/or at the output axles (27, 28) of the two tracks are of different lengths and are achieved by deflection rollers or deflection sleeves (47, 49) having diameters of different sizes,
- or **in that** the conveying speeds of the two tracks (17, 19) are set or settable differently as a compensation for a conveyor length difference between the two tracks (17, 19)
- by a separate drive being associated with each output axle (27, 29),
- or by two concentric drive shafts, which are pushed into one another and with which a respective separate drive is associated, being provided at the common input axle (21),
- or by the common input axle (21) of a single upper track (17) and a single lower track (18) being designed in split form and being provided with a drive at the left hand side for the one track and with a drive at the right hand side for the other track.

2. An overlapping unit according to claim 1,
**characterized in that**
the output axles (27, 29) are arranged at least substantially vertically above one another and/or **in that** the deflection position at the incoming side and/or at the outgoing side can be varied in a transverse direction for at least one of the tracks (17, 19).

3. An overlapping unit according to one of the preceding claims,
**characterized in that**
a longitudinal offset of the portions (11) conveyed in the tracks (17, 19) can be set to a predefined measure by setting the conveying speeds of the tracks (17, 19) relative to one another, and/or **in that** a conveyor (35) is connected directly upstream of the overlapping unit (15) and its conveying speed lies between the conveying speeds of the two tracks (17, 19).

4. An overlapping unit according to any one of the preceding claims,
**characterized in that**
both the upper track (17) and the lower track (19) extend obliquely to the longitudinal direction (T).

5. An overlapping unit according to any one of the preceding claims,
**characterized in that**
an intermediate deflection unit (23, 25) is provided for the upper track (17) between the input axle (21) and the output axle (27), with in particular the intermediate deflection unit (23, 25) being active in an inclination-varying manner such that the upper track (17) extends in a region at the output side with both runs (17a, 17b) above the lower track (19), and/or **in that** the intermediate deflection unit (25) is effective in a direction-varying manner such that the lower run (17b) of the upper track (17) includes a different angle with the longitudinal direction (T) in a region at the input side than the upper run (17a) of the upper track (17), and/or **in that** the intermediate deflection unit (25) avoids or reduces a lateral overlap between the lower run (17b) of the upper track (17) and the upper run (19a) of the lower track (19) until a predefined clear height between these two runs (17b, 19b) is reached.

6. An overlapping unit according to any one of the preceding claims,
**characterized in that**
an intermediate deflection unit (25) for the lower run (17b) of the upper track (17) is active both in an inclination-varying manner and in a direction-varying manner, and/or **in that** both runs (19a, 19b) of the lower track (19) each extend in a straight line between the input axle (21) and the output axle (29).

7. An overlapping unit according to any one of the preceding claims,
**characterized in that**
the overlapping unit (15) comprises a plurality of track pairs which are arranged next to one another in the transverse direction and which each have an upper track (17) and a lower track (19).

8. An overlapping unit according to any one of the preceding claims,
**characterized in that**
the overlapping unit (15) is configured as a cassette, namely as a module which is coupled in operation to a stationary substructure, which is removable and reinsertable as a whole and which comprises a base (16) for coupling to the substructure and the belt conveyor supported by the base (16), with in particular a drive motor for the cassette being integrated into the substructure and remaining at the substructure with a removed cassette.

9. An apparatus for the lateral overlapping of portions (11) which are transported in a longitudinal direction (T) and which each comprise at least one slice (13) cut off from a food product,
said apparatus comprising a plurality of overlapping units (15), each according to any one of the preceding claims, which are connected after one another in the longitudinal direction.

10. An apparatus for slicing food products, in particular a high-speed slicer, comprising an overlapping unit according to any one of the claims 1 to 8, wherein the overlapping unit (15) is integrated into a rack of the slicing apparatus.

11. A method for forming total portions (12) which each comprise at least two laterally overlapping portions (11) which each comprise at least one slice cut off from a food product,
in which the two portions (11) are supplied in tracks disposed next to one another to an overlapping unit (15) having the features of any one of the claims 1 to 8 which comprises a belt conveyor associated with the two tracks and having an upper track (17) leading to an upper height level and a lower track (19) leading to a lower height level; and
in which an upper portion (11) is conveyed by means of the upper track (17) above a lower portion (11) conveyed by means of the lower track (19) and is subsequently placed onto the lower portion (11), wherein
the upper track (17) and the lower track (19) are disposed at different height levels next to one another at the incoming side and laterally overlapping at the outgoing side.

12. A method according to claim 11,
**characterized in that**
the total portions (12) are each formed by means of a plurality of overlapping units (15) connected after one another in the longitudinal direction (T) successively by overlapping procedures taking place after one another in time at a respective one of the overlapping units (15), and/or **in that** a longitudinal offset of the portions (11) conveyed in the tracks (17, 19) is set to a predefined measure by setting the conveying speeds of the tracks (17, 19) relative to one another, and/or **in that** a conveyor length difference between the two tracks (17, 19) is compensated by the conveying speeds of the two tracks (17, 19) being set differently.

## Revendications

1. Unité de chevauchement pour faire chevaucher latéralement des portions (11) transportées dans une direction longitudinale (T), qui comprennent chacune au moins une tranche (13) séparée d'un produit alimentaire, comprenant un convoyeur à bande ayant au moins deux pistes (17, 19), une piste supérieure (17) et une piste inférieure (19) étant renvoyées, côté entrée, autour d'un axe d'entrée commun (21) et, côté sortie, autour de deux axes de sortie (27, 29) situés à des niveaux de hauteur différents, **caractérisée en ce que**
- un entraînement commun est associé aux deux pistes (17, 19), lequel permet d'entraîner l'axe d'entrée commun (21) des deux pistes (17, 19), les deux pistes (17, 19) se distinguant l'une de l'autre en ce qui concerne leur course de renvoi sur l'axe d'entrée (21) et/ou sur les axes de sortie (27, 29), les courses de renvoi sur l'axe d'entrée (21) et/ou sur les axes de sortie (27, 29) des deux pistes étant de longueurs différentes et étant obtenues par des poulies de renvoi ou des manchons de renvoi (47, 49) de diamètres différents,
- ou **en ce que**, pour compenser une différence de longueur de transport entre les deux pistes (17, 19), leurs vitesses de transport sont réglées ou réglables différemment,
- en associant à chaque axe de sortie (27, 29) un entraînement propre,
- ou en prévoyant, sur l'axe d'entrée commun (21), deux arbres d'entraînement concentriques, emboîtés l'un dans l'autre, à chacun desquels est associé un entraînement propre,
- ou en réalisant de façon partagée l'axe d'entrée commun (21) d'une seule piste supérieure (17) et d'une seule piste inférieure (18) et en le dotant d'un entraînement à gauche pour l'une des pistes et d'un entraînement à droite pour l'autre piste.

2. Unité de chevauchement selon la revendication 1,
**caractérisée en ce que**
les axes de sortie (27, 29) sont disposés au moins sensiblement verticalement l'un au-dessus de l'autre, et/ou **en ce que** pour au moins l'une des pistes (17, 19), la position de renvoi côté entrée et/ou côté sortie peut être modifiée dans la direction transversale.

3. Unité de chevauchement selon l'une des revendications précédentes,
**caractérisée en ce que**
un décalage longitudinal des portions (11) transportées dans les pistes (17, 19) peut être réglé à une mesure prédéfinie en ajustant les vitesses de transport des pistes (17, 19) l'une par rapport à l'autre, et/ou **en ce qu'**un convoyeur (35) est monté directement en amont de l'unité de chevauchement (15), dont la vitesse de transport se situe entre les vitesses de transport des deux pistes (17, 19).

4. Unité de chevauchement selon l'une des revendications précédentes,
**caractérisée en ce que**
la piste supérieure (17) et la piste inférieure (19) s'étendent toutes deux en oblique par rapport à la direction longitudinale (T).

5. Unité de chevauchement selon l'une des revendications précédentes,
**caractérisée en ce que**
un renvoi intermédiaire (23, 25) est prévu pour la piste supérieure (17) entre l'axe d'entrée (21) et l'axe de sortie (27), en particulier, le renvoi intermédiaire (23, 25) ayant pour effet de modifier la pente de telle sorte que la piste supérieure (17) s'étend, dans une zone côté sortie, avec les deux brins (17a, 17b) au-dessus de la piste inférieure (19), et/ou le renvoi intermédiaire (25) ayant pour effet de modifier la direction de telle sorte que le brin inférieur (17b) de la piste supérieure (17) forme, dans une zone côté entrée, un angle avec la direction longitudinale (T) qui diffère de celui du brin supérieur (17a) de la piste supérieure (17), et/ou **en ce que** le renvoi intermédiaire (25) évite ou réduit un chevauchement latéral entre le brin inférieur (17b) de la piste supérieure (17) et le brin supérieur (19a) de la piste inférieure (19), jusqu'à ce qu'une hauteur libre prédéfinie soit atteinte entre ces deux brins (17b, 19a).

6. Unité de chevauchement selon l'une des revendications précédentes,
**caractérisée en ce que**
un renvoi intermédiaire (25) pour le brin inférieur (17b) de la piste supérieure (17) a pour effet de modifier aussi bien la pente que la direction, et/ou **en ce que** les deux brins (19a, 19b) de la piste inférieure (19) s'étendent chacun en ligne droite entre l'axe d'entrée (21) et l'axe de sortie (29).

7. Unité de chevauchement selon l'une des revendications précédentes,
**caractérisée en ce que**
l'unité de chevauchement (15) comprend plusieurs paires de pistes disposées les unes à côté des autres dans la direction transversale et comprenant chacune une piste supérieure (17) et une piste inférieure (19).

8. Unité de chevauchement selon l'une des revendications précédentes,
**caractérisée en ce que**
l'unité de chevauchement (15) est réalisée sous la forme d'une cassette, à savoir sous la forme d'un module qui est couplé en fonctionnement à une infrastructure stationnaire, peut être retiré et réinséré dans son ensemble et qui comprend une base (16), destinée à être couplée à l'infrastructure, et ledit convoyeur à bande porté par la base (16), en particulier, un moteur d'entraînement pour la cassette étant intégré dans l'infrastructure et restant sur l'infrastructure lorsque la cassette est retirée.

9. Dispositif pour faire chevaucher latéralement des portions (11) transportées selon une direction longitudinale (T) et comprenant chacune au moins une tranche (13) séparée d'un produit alimentaire,
comprenant plusieurs unités de chevauchement (15), chacune selon l'une des revendications précédentes, montées les unes derrière les autres selon la direction longitudinale (T).

10. Dispositif de tranchage de produits alimentaires, en particulier trancheuse à haute performance, comprenant une unité de chevauchement selon l'une des revendications 1 à 8, l'unité de chevauchement (15) étant intégrée dans un bâti du dispositif de tranchage.

11. Procédé pour former des portions globales (12) qui comprennent chacune au moins deux portions (11) se chevauchant latéralement et comprenant chacune au moins une tranche séparée d'un produit alimentaire,
dans lequel les deux portions (11) sont amenées dans des pistes juxtaposées à une unité de chevauchement (15) présentant les caractéristiques de l'une des revendications 1 à 8, qui comprend un convoyeur à bande associé aux deux pistes et comportant une piste supérieure (17) menant à un niveau de hauteur supérieur et une piste inférieure (19) menant à un niveau de hauteur inférieur, et
dans lequel une portion supérieure (11) est transportée au moyen de la piste supérieure (17) par-dessus une portion inférieure (11), transportée au moyen de la piste inférieure (19), et est ensuite posée sur la portion inférieure (11),
la piste supérieure (17) et la piste inférieure (19) étant situées, côté entrée, l'une à côté de l'autre et, côté sortie, à des niveaux de hauteur différents en se chevauchant latéralement.

12. Procédé selon la revendication 11,
**caractérisé en ce que**
les portions globales (12) sont formées chacune au moyen de plusieurs unités de chevauchement (15), montées les unes derrière les autres dans la direction longitudinale (T), successivement par des processus de chevauchement s'effectuant les uns après les autres sur l'une des unités de chevauchement (15) respectives, et/ou **en ce qu'**un décalage longitudinal des portions (11) transportées dans les pistes (17, 19) est réglé à une mesure prédéfinie en réglant les vitesses de transport des pistes (17, 19) l'une par rapport à l'autre, et/ou **en ce qu'**une différence de longueur de transport entre les deux pistes (17, 19) est compensée en réglant différemment les vitesses de transport des deux pistes (17, 19).
